# EUROPEAN PATENT APPLICATION

(11) **EP 3 287 931 A1**
(43) Date of publication of application: **28.02.2018**
(21) Application number: 16185149.8
(22) Date of filing: 22.08.2016
(51) Int. Cl.: G06F 21/62, G06F 21/10, H04L 29/06

(54) **DATA GUARD SYSTEM**

(71) Applicant: Keyp GmbH, 80799 München (DE)
(72) Inventor: Edmaier, Markus, 84556 Kastl (DE); Feldmann, Stephanie, 80634 München (DE); Mang, Simon, 80636 München (DE); Möhring, Maximilian, 80333 München (DE)
(74) Representative: Patentship Patentanwaltsgesellschaft mbH

(57) **Abstract**

The invention relates to a data guard system (102) for guarding access to data token of a plurality of data by a requesting communication entity (104). The data guard system (102) comprises a guard interface (102a) being configured to receive from the requesting communication entity (104) an access request requesting an access to the data token, the access request comprising information data representing an information content, and a data guard (102b) with an access rule for ruling the access to the data token, the data guard (1 02b) being configured to extract an attribute relating to the information content from the information data and to determine whether the extracted attribute fulfills the access rule, wherein the data guard (102b) is further configured to output a first output signal if the extracted attribute fulfills the access rule or to output a second output signal if the extracted attribute violates the access rule.

## Description

### TECHNICAL FIELD

In general, the present invention relates to the field of communication systems. In particular, the present invention relates to systems, devices and methods for guarding access to data in communication systems.

### BACKGROUND

Data communication over a variety of networks, such as Internet protocol (IP) networks, smartphones or computers has extremely increased over recent years. The affordability and availability of smartphones, computers, or other network access devices has made their use prevalent in a variety of applications.

As access to Internet and other communication networks becomes easier and easier, these networks are increasingly used for applications involving the transfer of data such as images, audio, video and text. For example, data for computer software, music, video, and other applications can be requested and delivered via Internet. The number of network subscribers, data providers, and requests by those subscribers for data transfer and other content is growing very fast. However, the limitations of current systems can restrict the ability to meet the demand in a reliable, secure, efficient and affordable manner. In particular, a challenge to network data transfer involves the management of media rights associated with digital rights management. For example, in order to inhibit and/or prevent fraudulent behavior, such as copying, distribution or other unauthorized use of data, security precautions have to be taken.

Thus, there is a need for improved systems, devices and methods for guarding access to data in communication systems.

### SUMMARY

It is an object of the invention to provide for improved systems, devices and methods for guarding access to data in communication systems.

The foregoing and other objects are achieved by the subject matter of the independent claims. Further implementation forms are apparent from the dependent claims, the description and the figures.

According to a first aspect the invention relates to a data guard system for guarding access to data token of a plurality of data by a requesting communication entity, the data guard system comprising: a guard interface being configured to receive from the requesting communication entity an access request requesting an access to the data token, the access request comprising information data representing an information content, and a data guard with an access rule for ruling the access to the data token, the data guard being configured to extract an attribute relating to the information content from the information data and to determine whether the extracted attribute fulfills the access rule, wherein the data guard is further configured to output a first output signal if the extracted attribute fulfills the access rule or to output a second output signal if the extracted attribute violates the access rule.

In an implementation form the data guard system further comprises another data guard with another access rule for ruling the access to the data token, the other access rule being different from the access rule, the other data guard being configured to extract another attribute relating to the information content from the information data and to determine whether the other extracted attribute fulfills the other access rule, wherein the further data guard is further configured to output a first output signal if the other extracted attribute fulfills the other access rule or to output a second output signal if the other extracted attribute violates the other access rule.

In an implementation form the information content is represented by a data stream, and the data guard is configured to extract the respective attribute from the information content.

In an implementation form the data guard is configured to identify the information content in order to extract the respective attribute.

In an implementation form the data guard is configured to extract a frequency spectrum of the information content to obtain the respective attribute.

In an implementation form the respective data guard is configured to compare the respective extracted attribute to a reference attribute in order to determine whether the respective extracted attribute fulfills the respective rule.

In an implementation form the data guard system further comprises a decider being configured to output an enable signal for enabling the requesting communication entity to access to the data token if each data guard of the data guard system outputs the first signal, or to output a disable signal if the data guard outputs the second signal.

In an implementation form the guard interface is configured to establish a communication channel between the requesting communication entity and the data token if the decider outputs the enable signal, or to reject the access request if the decider outputs the disable signal.

In an implementation form the guard interface is configured to output a video signal representing the enable signal for displaying by a display, or the data guard system comprises a display for displaying the enable signal.

In an implementation form the data guard system is formed by a computer executable code, the computer executable code being signed with a digital signature, in particular with a Hash value generated upon the bases of the computer executable code.

In an implementation form the guard interface is a HTML interface or a HTTP interface or a GUI interface or a API interface.

According to a second aspect the invention relates to a data guard method for guarding access to data token of a plurality of data by a requesting communication entity. The data guard method comprises the following steps: receiving from the requesting communication entity an access request requesting an access to the data token, the access request comprising information data representing an information content, extracting an attribute relating to the information content from the received information data, determining whether the extracted attribute fulfills an access rule, and outputting a first output signal if the extracted attribute fulfills the access rule or outputting a second output signal if the extracted attribute violates the access rule.

According to a third aspect the invention relates to a communication device. The communication device comprises the data guard system of the first aspect and one of the implementation forms thereof and a communication interface, the communication interface being configured to receive the access request over a communication network, and to pass the received access request to the guard interface.

In an implementation form the communication interface is a wireless interface, in particular a LTE interface or a UMTS interface or a WiFi interface or a NFC interface or an infrared interface.

In an implementation form the communication device is configured to execute the data guard method of the second aspect.

In an implementation form the data guard system is a software code which can be downloaded from a server according to rules defined by an owner of the software code.

In an implementation form the software code is a Java or an objective-C code.

The invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a communication system comprising a data guard system and a requesting communication entity communicating over a communication channel according to an embodiment;
Fig. 2 shows a schematic diagram of a data guard method for guarding access to data token of a plurality of data by a requesting communication entity according to an embodiment; and
Fig. 3 shows a schematic diagram of a communication system comprising a communication device and a requesting communication entity communicating over a communication channel according to an embodiment.

In the figures, identical reference signs will be used for identical or functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It will be appreciated that the invention may be placed in other aspects and that structural or logical changes may be made without departing from the scope of the invention. The following detailed description, therefore, is not to be taken in a limiting sense, as the scope of the invention is defined by the appended claims.

For instance, it will be appreciated that a disclosure in connection with a described method will generally also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims, embodiments with functional blocks or processing units are described, which are connected with each other or exchange signals. It will be appreciated that the invention also covers embodiments which include additional functional blocks or processing units that are arranged between the functional blocks or processing units of the embodiments described below.

Finally, it is understood that the features of the various exemplary aspects described herein may be combined with each other, unless specifically noted otherwise.

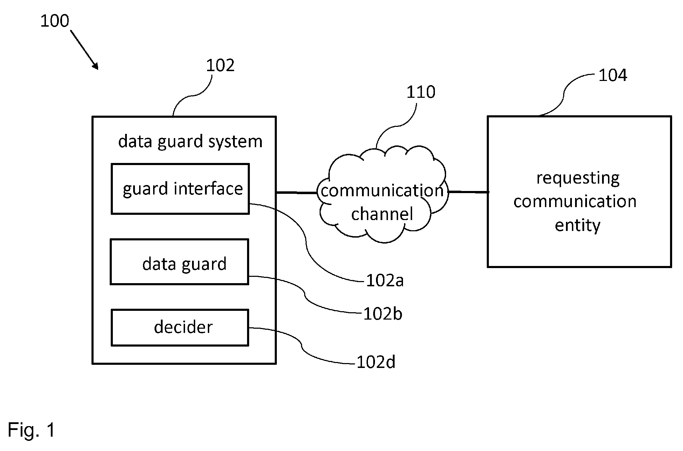

Figure 1 shows a schematic diagram illustrating a communication system 100 comprising a data guard system 102 and a requesting communication entity 104 communicating over a communication channel 110 according to an embodiment. In an embodiment the data guard system 102 can be configured to guard access to data token of a plurality of data by the requesting communication entity 104.

In an embodiment the data guard system 102 can comprise a guard interface 102a, which can be configured to receive an access request requesting an access to the data token from the requesting communication entity 104, the access request can compare information data representing an information content. Furthermore, the data guard system 102 can comprise a data guard 102b with an access rule for ruling the access to the data token, the data guard 102b can be configured to extract an attribute relating to the information content from the information data and to determine whether the extracted attribute fulfills the access rule. Moreover, the data guard 102b can be configured to output a first output signal if the extracted attribute fulfills the access rule or to output a second output signal if the extracted attribute violates the access rule.

In an embodiment the data guard system 102 can comprise a decider 102d, wherein the decider 102d can be configured to output an enable signal for enabling the requesting communication entity 104 to access to the data token if each data guard 102b of the data guard system 102 outputs the first signal, or to output a disable signal if the data guard 102b outputs the second signal.

The communication channel 110 can be a wired or a wireless communication channel.

In an embodiment the respective information content of the data guard 102b can be a meta content, in particular a geographical location of the requesting communication entity 104 or personal information relating to a user of the requesting communication entity 104, and the data 102b guard can be configured to extract the respective meta content to obtain the respective attribute.

In an embodiment the guard interface 102a can be a HTML interface or a HTTP interface.

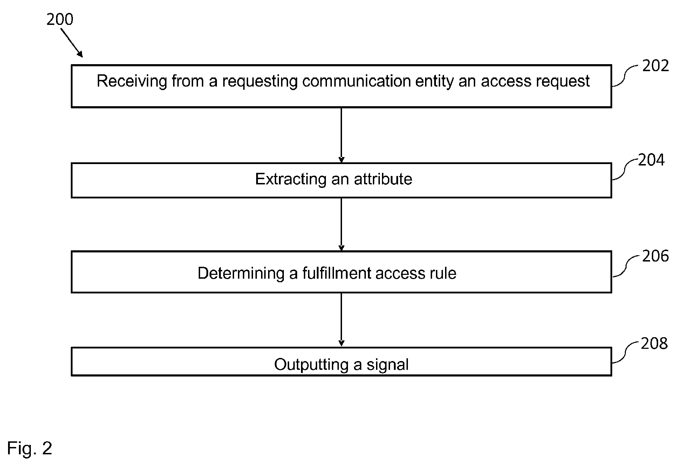

Figure 2 shows a schematic diagram of a data guard method 200 for guarding access to data token of a plurality of data by a requesting communication entity 104 according to an embodiment. In an embodiment the method 200 can comprise the step of:
Receiving 202 from the requesting communication entity 104 an access request requesting an access to the data token, the access request comprising information data representing an information content;
Extracting 204 an attribute relating to the information content from the received information data;
Determining 206 whether the extracted attribute fulfills an access rule; and
Outputting 208 a first output signal if the extracted attribute fulfills the access rule or outputting a second output signal if the extracted attribute violates the access rule.

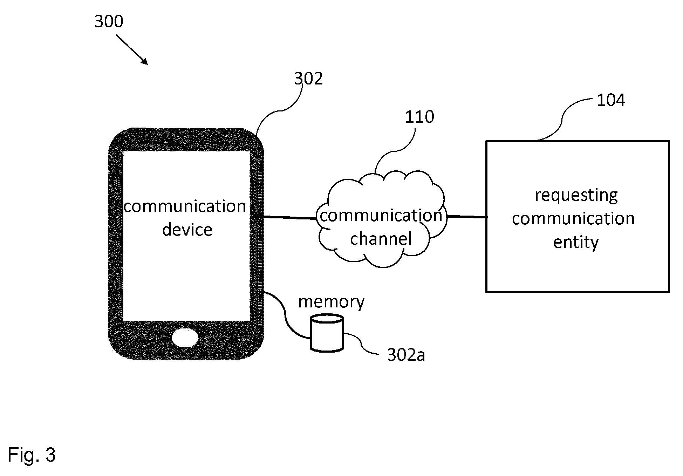

Figure 3 shows a schematic diagram of a communication system 300, comprising a communication device 302 and a requesting communication entity 104 communicating over a communication network or channel 110 according to an embodiment. In an embodiment the communication device 302 can comprise the data guard system 102 and a communication interface, wherein the communication interface can be configured to receive access request over the communication network or channel 110 and to pass the received access request to the guard interface 102a.

The communication channel 110 can be a wired or a wireless communication channel.

In an embodiment the data guard system 102 can be formed by an executable software code, and the communication device 302 can comprise a processor configured to execute the executable software code. In an embodiment the computer executable code can be signed with a digital signature. Signing the executable code with a digital signature has the advantage of allowing the processor of the communication device 302 to identify the signature and to verify that the executable code has not been modified since it was signed. In such a way, the executable code can be protected by the digital signature, because the digital signature becomes invalid if any part of the executable code is changed. Signing the executable code can also be used in combination with an identity of the data guard system 102, provisioning profile, or entitlements in order to ensure at least the following aspects:
the data guard system 102 can be built and signed by trusted entities;
the data guard system 102 can run on designated development devices; and
the data guard system 102 can be configured to avoid services that the entrusted entity did not add to the data guard system 102.

Furthermore, signing the executable code with a digital signature can allow the entrusted entity to remove or redesign the data guard system 102.

In an embodiment the communication device 302 can comprise a memory 302a for access rule storage, and the data guard system 102 can be configured to read out the respective access rule from the memory 302a.

In an embodiment the communication device 302 can be a smartphone or a personal computer.

In another embodiment, the communication device 302 can be configured to execute the data guard method 200.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.
Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art will readily recognize that there are numerous applications of the invention beyond those described herein. While the present invention has been described with reference to one or more particular embodiments, those skilled in the art will recognize that many changes may be made thereto without departing from the scope of the present invention. It is therefore to be understood that within the scope of the appended claims and their equivalents, the invention may be practiced otherwise than as specifically described herein.

## Claims

1. Data guard system (102) for guarding access to data token of a plurality of data by a requesting communication entity (104), the data guard system (102) comprising:
a guard interface (102a) being configured to receive from the requesting communication entity (104) an access request requesting an access to the data token, the access request comprising information data representing an information content;
a data guard (102b) with an access rule for ruling the access to the data token, the data guard (102b) being configured to extract an attribute relating to the information content from the information data and to determine whether the extracted attribute fulfills the access rule, wherein the data guard (102b) is further configured to output a first output signal if the extracted attribute fulfills the access rule or to output a second output signal if the extracted attribute violates the access rule.

2. The data guard system (102) of claim 1, further comprising another data guard with another access rule for ruling the access to the data token, the other access rule being different from the access rule, the other data guard being configured to extract another attribute relating to the information content from the information data and to determine whether the other extracted attribute fulfills the other access rule, wherein the further data guard is further configured to output a first output signal if the other extracted attribute fulfills the other access rule or to output a second output signal if the other extracted attribute violates the other access rule.

3. The data guard system (102) of claim 1 or 2, wherein the information content is represented by a data stream, and wherein the data guard (102b) is configured to extract the respective attribute from the information content.

4. The data guard system (102) of any of the preceding claims, wherein the data guard (102b) is configured to identify the information content in order to extract the respective attribute.

5. The data guard system (102) of any of the preceding claims, wherein the data guard (102b) is configured to extract a frequency spectrum of the information content to obtain the respective attribute.

6. The data guard system (102) of any of the preceding claims, wherein the respective data guard (102b) is configured to compare the respective extracted attribute to a reference attribute in order to determine whether the respective extracted attribute fulfills the respective rule.

7. The data guard system (102) of any of the preceding claims, further comprising a decider (102d) being configured to output an enable signal for enabling the requesting communication entity (104) to access to the data token if each data guard (102b) of the data guard system (102) outputs the first signal, or to output a disable signal if the data guard (102b) outputs the second signal.

8. The data guard system (102) of claim 7, wherein the guard interface (102a) is configured to establish a communication channel between the requesting communication entity (104) and the data token if the decider (102d) outputs the enable signal, or to reject the access request if the decider (102d) outputs the disable signal.

9. The data guard system (102) of claim 7 or 8, wherein the guard interface (102a) is configured to output a video signal representing the enable signal for displaying by a display, or wherein the data guard system (102) comprises a display for displaying the enable signal.

10. The data guard system (102) of any of the preceding claims, being formed by a computer executable code, the computer executable code being signed with a digital signature, in particular with a Hash value generated upon the bases of the computer executable code.

11. The data guard system (102) of any of the preceding claims, wherein the guard interface (102a) is a HTML interface or a HTTP interface or a GUI interface or a API interface.

12. Data guard method (200) for guarding access to data token of a plurality of data by a requesting communication entity (104), the data guard method (200) comprising:
Receiving (202) from the requesting communication entity (104) an access request requesting an access to the data token, the access request comprising information data representing an information content;
Extracting (204) an attribute relating to the information content from the received information data;
Determining (206) whether the extracted attribute fulfills an access rule; and
Outputting (208) a first output signal if the extracted attribute fulfills the access rule or outputting a second output signal if the extracted attribute violates the access rule.

13. Communication device (302), comprising:
the data guard system (102) of any of the preceding claims 1 to 11; and
a communication interface, the communication interface being configured to receive the access request over a communication network (110), and to pass the received access request to the guard interface (102a).

14. The communication device (302) of claim 13, wherein the communication interface (102a) is a wireless interface, in particular a LTE interface or a UMTS interface or a WiFi interface or a NFC interface or an infrared interface.

15. The communication device (302) of claim 13 or 14, being configured to execute the data guard method (200) of claim 12.
